# EUROPÄISCHE PATENTSCHRIFT

(11) **EP 3 610 229 B1**
(45) Veröffentlichungstag und Bekanntmachung des Hinweises auf die Patenterteilung: **14.04.2021**
(21) Anmeldenummer: 18746630.5
(22) Anmeldetag: 17.07.2018
(51) Int. Cl.: G01G 19/04, G01G 19/10

(54) **VORRICHTUNG UND VERFAHREN ZUR LASTBESTIMMUNG FÜR FAHRZEUGE**
DEVICE AND METHOD FOR DETERMINING LOADS FOR VEHICLES
DISPOSITIF ET PROCÉDÉ DE DÉTERMINATION DE LA CHARGE DE VÉHICULES

(30) Priorität: 18.07.2017 AT 506002017
(43) Veröffentlichungstag der Anmeldung: 19.02.2020
(73) Patentinhaber: Siemens Mobility Austria GmbH, 1210 Wien (AT)
(72) Erfinder: FRIEDRICH, Barbara, 8403 Lebring-Sankt Margarethen (AT)
(74) Vertreter: Deffner, Rolf
(86) Internationale Anmeldenummer: PCT/EP2018/069389
(87) Internationale Veröffentlichungsnummer: WO 2019/016206

(56) Entgegenhaltungen:
- DE-A1-102016 007 453
- US-A1- 2004 178 005
- US-A1- 2010 180 677
- US-A1- 2013 274 966

## Beschreibung

Die Erfindung betrifft eine Vorrichtung zur Lastbestimmung für Fahrzeuge, insbesondere für Schienenfahrzeuge mit zumindest einem Wagenkasten und zumindest einem Fahrwerk, wobei zumindest ein Luftbalg mit zumindest einem Drucksensor sowie zumindest ein Beschleunigungssensor vorgesehen sind, und wobei der zumindest eine Luftbalg und der zumindest eine Beschleunigungssensor mit zumindest einer Recheneinheit verbunden sind.

Eine präzise Lastbestimmung eines Fahrzeugs, insbesondere eines Schienenfahrzeugs ist wichtig, um beispielsweise das Fahrzeug im richtigen Ausmaß abbremsen zu können, d.h. nicht zu wenig Bremsmoment auf Räder aufzubringen und nicht zu viel.
Beispielsweise stellen sich in einem Reisezugwagen oder einem Triebzug aufhaltende Passagiere Lasten dar, die auf Fahrwerke und Räder wirken. Diese Lasten weisen bestimmte Größen und bestimmte Verteilungen über das Fahrzeug auf.
Ebenso wirkt eine Fracht eines Güterwagens als Last auf Fahrwerke und Räder bzw. Radsätze des Fahrzeugs.

Zur Einstellung von Bremsdrücken eines Druckluftbremssystems werden häufig Lastbremsventile eingesetzt. Diese Lastbremsventile sind häufig mit als Luftfedern ausgebildeten Sekundärfederungen sowie mit Bremszylindern verbunden. In Abhängigkeit eines Luftdrucks in den Luftfedern werden mittels des Lastbremsventils Bremszylinderdrücke eingestellt. Dadurch werden lastabhängige Bremsungen erzielt.

Aus dem Stand der Technik ist beispielsweise die DE 40 11 205 A1 bekannt. Darin ist ein lastabhängiges Bremsventil zur Steuerung einer Druckluftbremse eines Schienenfahrzeugs beschrieben. Es ist ein schwenkbarer Hebel vorgesehen, welcher in Abhängigkeit von Lastzuständen des Schienenfahrzeugs ausschwenkt und, je nach Lastzustand, eine erste Kante oder eine zweite Kante eines Kolbens des Bremsventils berührt und Kräfte darauf ausübt. Dadurch wird eine zur Last des Schienenfahrzeugs proportionale Bremskraft bewirkt.

Weiterhin wird in der DE 10 2016 007 453 A1 ein Lastsensor für ein Schienenfahrzeug offenbart, der für eine Einstellung von Bremsdrücken eingesetzt wird. Dieser weist ein federbelastetes Sattelventil, eine Scheibe, eine ringförmige Einrichtung, weitere Komponenten sowie Hohlräume auf. Mittels der ringförmigen Einrichtung werden Relativbewegungen von Komponenten des Lastsensors reduziert und somit Fertigung und Betriebssicherheit des Lastsensors verbessert.
Darüber hinaus zeigt die WO 2008/007067 A1 ein Ventil zur kontinuierlichen Bestimmung von vertikalen Lasten eines Schienenfahrzeugs. Das Ventil ist zwischen einer Feder und einem keilförmigen Führungselement auf einem Fahrwerk angeordnet und bewegt sich mit diesem Führungselement. Einflüsse von Lenkbewegungen des Fahrwerks auf das Ventil bzw. auf die Bestimmung der vertikalen Lasten werden dadurch verringert. Das Dokument US2013/274966 offenbart eine Vorrichtung zur Lastbestimmung für Fahrzeuge gemäß dem Stand der Technik.

Der Erfindung liegt die Aufgabe zugrunde, eine gegenüber dem Stand der Technik weiterentwickelte Vorrichtung zur Lastbestimmung anzugeben.
Erfindungsgemäß wird diese Aufgabe gelöst mit einer Vorrichtung der eingangs genannten Art,
bei welcher der zumindest eine Luftbalg ausschließlich zur Lastbestimmung eingesetzt ist.
Dadurch kann auf eine Lastbestimmung aus einem Federungssystem verzichtet werden und es wird eine Genauigkeitssteigerung der Lastbestimmung erzielt.
Die Genauigkeitssteigerung ist auf einen Einsatz des Beschleunigungssensors, welcher Fahrzeugbeschleunigungen erfasst, zurückzuführen. Die Fahrzeugbeschleunigungen werden in der Lastbestimmung berücksichtigt.
Die Genauigkeitssteigerung bewirkt eine präzisere Einstellung von Bremsdrücken einer lastabhängigen Bremse. Dadurch verringern sich wiederum Bremsenverschleiß und damit in Zusammenhang stehende Wartungs- und
Instandhaltungsaufwendungen.
Weiterhin kann bei Einsatz der erfindungsgemäßen Vorrichtung auf verschleißende Komponenten wie schwenkbare Hebel oder Führungselemente verzichtet werden.

Es ist günstig, wenn der zumindest eine Luftbalg nahe einem Wagenkastenschwerpunkt angeordnet ist, insbesondere, wenn eine Luftbalg-Längsachse durch den Wagenkastenschwerpunkt verläuft.
Durch diese Maßnahme werden von aus dem Wagenkasten in den Luftbalg eingeleiteten Kräften erzeugte Drehmomente reduziert. Eine Beeinflussung von Druckverhältnissen in dem Luftbalg aufgrund dieser Drehmomente und somit eine Beeinflussung der Luftbedarfsbestimmung erfolgen demnach in nur vernachlässigbarem Ausmaß.

Eine vorteilhafte Ausgestaltung erhält man, wenn der zumindest eine Beschleunigungssensor nahe dem zumindest einen Luftbalg angeordnet ist, insbesondere, wenn die Luftbalg-Längsachse durch den zumindest einen Beschleunigungssensor verläuft.
Durch diese Maßnahme wird der Vorteil erzielt, dass Fahrzeugbeschleunigungen, welche nahe an dem Luftbalg auftreten, erfasst werden.
Dadurch können Einflüsse der Fahrzeugbeschleunigungen auf die Druckverhältnisse in dem Luftbalg, welche die Lastbestimmung verfälschen, möglichst exakt erfasst und rechnerisch aus der Lastbestimmung exkludiert werden.

Nachfolgend wird die Erfindung anhand von Ausführungsbeispielen näher erläutert.

Es zeigen beispielhaft:
- Fig. 1:: Ein Seitenriss einer beispielhaften Ausführungsvariante eines erfindungsgemäßen Luftbalgs,
- Fig. 2:: Eine schematische Darstellung eines Schienenfahrzeugs mit einem ersten Wagen, einem zweiten Wagen und einem dritten Wagen, wobei zwischen einem Wagenkasten und einem Fahrwerk eine beispielhafte Ausführungsvariante einer erfindungsgemäßen Vorrichtung zur Lastbestimmung angeordnet ist,
- Fig. 3:: Ein Luftdruckschema für einen Anschluss eines erfindungsgemäßen Luftbalgs, und
- Fig. 4:: Ein Flussdiagramm eines erfindungsgemäßen Verfahrens zur Lastbestimmung.

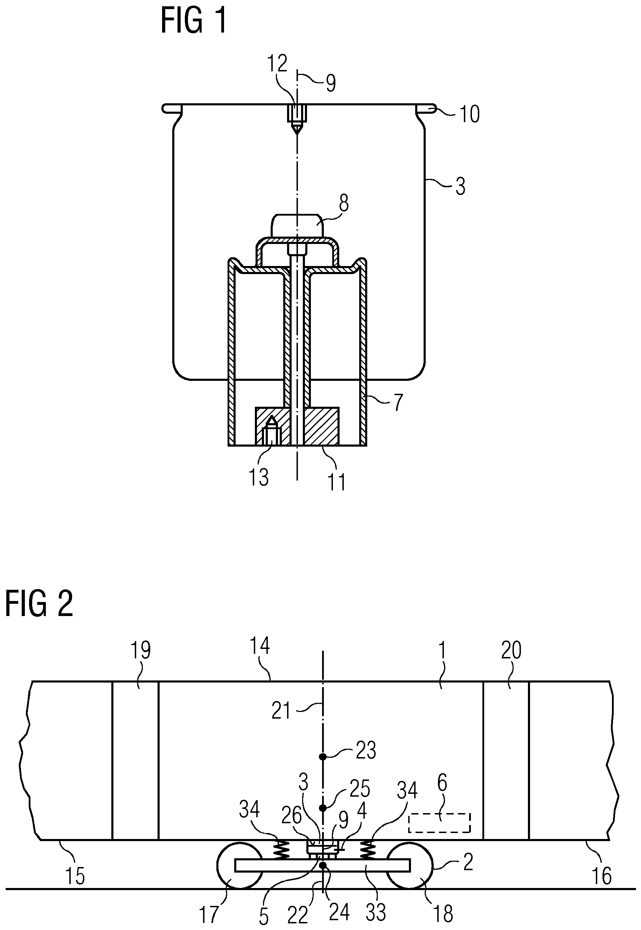

Eine in Fig. 1 gezeigte, beispielhafte Ausführungsvariante eines Luftbalgs 3 einer erfindungsgemäßen Vorrichtung zur Lastbestimmung eines Schienenfahrzeugs ist mit einem Abrollkolben 7, auf dem ein Anschlagpuffer 8 vorgesehen ist, verbunden und um eine Luftbalg-Längsachse 9 angeordnet. Über eine Deckplatte 10, eine erste Befestigungsbohrung 12 mit einem ersten Gewinde sowie über eine nicht dargestellte erste Schraube ist der Luftbalg 3 mit einem in Fig. 2 gezeigten Wagenkasten 1 des Schienenfahrzeugs verschraubt.
Über eine Grundplatte 11, eine zweite Befestigungsbohrung 13 mit einem zweiten Gewinde sowie eine nicht dargestellte zweite Schraube ist der Luftbalg 3 mit einem in Fig. 2 gezeigten Fahrwerk 2 verschraubt.
Relativbewegungen zwischen dem Wagenkasten 1 und dem Fahrwerk 2 bewirken Veränderungen von Luftdrücken innerhalb des Luftbalgs 3. Ebenso erfolgen dadurch Bewegungen des Abrollkolbens 7 relativ zu der Deckplatte 10. Der Anschlagpuffer 8 schützt den Abrollkolben 7 und die Deckplatte 10 vor Beschädigungen, die bei Stößen des Abrollkolbens 7 und der Deckplatte 10 gegeneinander auftreten können.

Fig. 2 zeigt ein Schienenfahrzeug mit einem ersten Wagen 14, der einen Wagenkasten 1 und ein Fahrwerk 2 umfasst. Das Fahrwerk 2 weist ein erstes Räderpaar 17, ein zweites Räderpaar 18 sowie einen Fahrwerksrahmen 33 auf und ist unterhalb des Wagenkastens 1 angeordnet. Zwischen dem Fahrwerk 2 und dem Wagenkasten 1 ist eine Sekundärfederung 34 vorgesehen, die auf dem Fahrwerksrahmen 33 gelagert ist.
Ein erster Wagenübergang 19 verbindet den ersten Wagen 14 mit einem zweiten Wagen 15, ein zweiter Wagenübergang 20 den ersten Wagen 14 mit einem dritten Wagen 16.
In Fig. 2 ist ein Zustand des Schienenfahrzeugs dargestellt, bei dem sich dieses in Stillstand auf einer horizontalen Ebene befindet.

Der Wagenkasten 1 weist eine Wagenkastenhochachse 21 auf, das Fahrwerk 2 eine Fahrwerkshochachse 22. Die Wagenkastenhochachse 21 und die Fahrwerkshochachse 22 verlaufen im gezeigten Zustand des Schienenfahrzeugs ineinander und sind parallel zueinander ausgerichtet. Auf der Wagenkastenhochachse 21 liegt ein Wagenkastenschwerpunkt 23, auf der Fahrwerkshochachse 22 ein Fahrwerksschwerpunkt 24 Der Wagenkastenschwerpunkt 23 und der Fahrwerksschwerpunkt 24 haben im gezeigten Zustand des Schienenfahrzeugs gleiche horizontale Positionen.
Ein Gesamtschwerpunkt 25 des ersten Wagens 14 ist demzufolge im dargestellten Zustand des Schienenfahrzeugs horizontal gleich positioniert wie der Wagenkastenschwerpunkt 23 und der Fahrwerksschwerpunkt 24.

Zwischen dem Wagenkasten 1 und dem Fahrwerk 2 ist ein Luftbalg 3 einer Vorrichtung zur Lastbestimmung angeordnet. Eine Luftbalg-Längsachse 9 verläuft im gezeigten Zustand des Schienenfahrzeugs durch den Wagenkastenschwerpunkt 23, den Fahrwerksschwerpunkt 24, sowie durch den Gesamtschwerpunkt 25 und somit parallel zu der Wagenkastenhochachse 21 sowie der Fahrwerkshochachse 22.
Der Wagenkasten 1 übt Gewichtskräfte, Kräfte aufgrund einer Zuladung des ersten Wagens 14 und weitere Kräfte, welche in alle Raumrichtungen wirken können, auf den Luftbalg 3 aus. Aufgrund der Lage des Luftbalgs 3 relativ zu dem Wagenkastenschwerpunkt 23, dem Fahrwerksschwerpunkt 24 und dem Gesamtschwerpunkt 25 wirkt im gezeigten Zustand des Schienenfahrzeugs die Gewichtskraft des Wagenkastens 1 und, bei gleichmäßiger Verteilung von Fahrgästen in dem Wagenkasten 1, die Kraft aufgrund der Zuladung frei von Drehmomenten auf den Luftbalg 3.

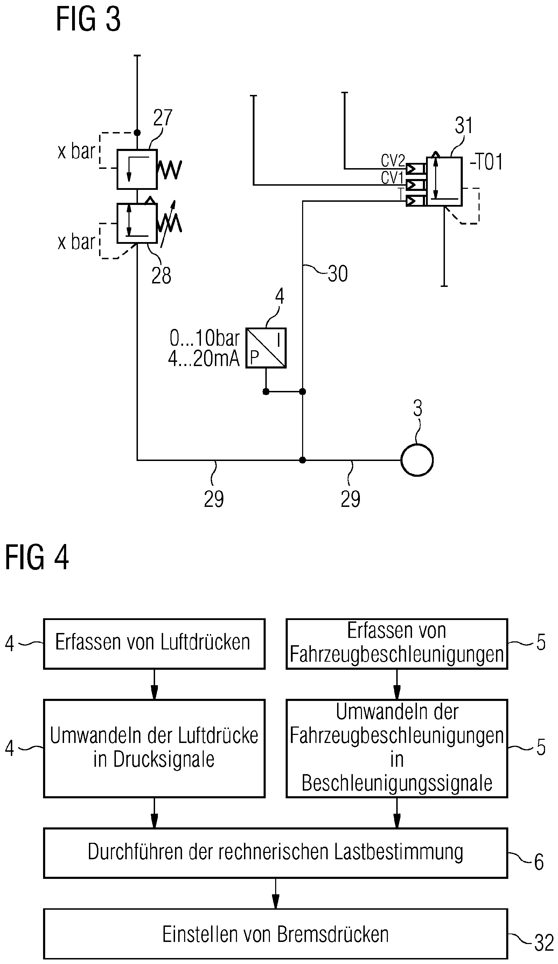

Der Luftbalg 3 ist mit Druckluft gefüllt und weist eine Verbindung mit einem Druckluftsystem des Schienenfahrzeugs auf. Ein entsprechendes Druckluftschema ist in Fig. 3 dargestellt.

Ein Drucksensor 4, der aus dem Stand der Technik und insbesondere auch für Luftfedern bekannt ist, erfasst in dem Luftbalg 3 wirkende Luftdrücke.
Der Luftdruck innerhalb des Luftbalgs 3 gibt, multipliziert mit einer Querschnittfläche 26 des Luftbalgs 3 mit hoher Genauigkeit oben genannte Kräfte aus dem Wagenkasten 1 (Gewichtskraft und Kraft aus der Zuladung) und somit eine Last auf das Fahrwerk 2 an.

Es können jedoch, beispielsweise wenn sich das Schienenfahrzeug bewegt, Lageänderungen des Wagenkastenschwerpunkts 23, des Fahrwerksschwerpunkts 24 und des Gesamtschwerpunkts 25 auftreten, welche die Lastbestimmung mittels des Luftbalgs 3 und des Drucksensors 4 beeinflussen bzw. verfälschen, d.h. Fehler bewirken. Weiterhin können Fahrzeugbeschleunigungen bzw. Kräfte in Längs- und Querrichtung auf den Luftbalg 3 wirken und ebenfalls Fehler in der Lastbestimmung hervorrufen.
Aus diesem Grund ist knapp unterhalb des Luftbalgs 3 ein Beschleunigungssensor 5, der als aus dem Stand der Technik bekannter piezoelektrischer Sensor ausgebildet ist, auf einer Oberseite des Fahrwerksrahmens 33 bzw. zwischen dem Wagenkasten 1 und dem Fahrwerk 2 angeordnet. Der Beschleunigungssensor 5 erfasst Fahrzeugbeschleunigungen bezüglich Translation in drei Raumrichtungen, aus denen Fehler der Lastbestimmung ermittelt und rechnerisch ausgeglichen werden können.
Der Beschleunigungssensor 5 ist nahe dem Luftbalg 3 angeordnet, die Luftbalg-Längsachse 9 verläuft durch den Beschleunigungssensor 5. Der Beschleunigungssensor 5 gibt daher mit hoher Genauigkeit die auf den Luftbalg 3 wirkenden Fahrzeugbeschleunigungen an. Der rechnerische Ausgleich von Fehlern aufgrund oben beschriebener Fehler erfolgt demzufolge mit großer Präzision.

Der Drucksensor 4 und der Beschleunigungssensor 5 sind zwecks Übertragung von Drucksignalen (aus den erfassten Luftdrücken gebildet) und Beschleunigungssignalen (aus den erfassten Beschleunigungssignalen gebildet) über nicht gezeigte Leitungswege mit einer Recheneinheit 6 verbunden, in der die Lastbestimmung erfolgt. Die Recheneinheit 6 ist in dem Wagenkasten 1 angeordnet. Als erfindungsgemäße Alternative kann sie jedoch beispielsweise auch in dem Fahrwerk 2 vorgesehen sein.
Erfindungsgemäß ist es weiterhin auch vorstellbar, dass die Übertragung der Drucksignale und der Beschleunigungssignale mittels einer Funkverbindung erfolgt.

Erfindungsgemäß ist es ferner denkbar, dass die Luftbalg-Längsachse 9 nicht durch den Wagenkastenschwerpunkt 23 bzw. nicht durch den Gesamtschwerpunkt 25 verläuft, beispielsweise, wenn unterhalb des Wagenkastens 1 zwei Fahrwerke 2 angeordnet sind. Bei einer derartigen Anordnung werden die oben beschriebenen Vorteile der erfindungsgemäßen Vorrichtung zur Lastbestimmung zumindest zum Teil ausgenützt. Auf diese Anordnung zurückzuführende Fehler der Lastbestimmung aufgrund eines Abstands zwischen dem Luftbalg 3 und dem Wagenkastenschwerpunkt 23 bzw. dem Gesamtschwerpunkt 25 werden über eine rechnerische Berücksichtigung von mittels des Beschleunigungssensors 5 erfassten Fahrzeugbeschleunigungen ausgeglichen.

Darüber hinaus ist es erfindungsgemäß vorstellbar, mehr als einen Luftbalg 3 und mehr als einen Beschleunigungssensor 5 zwischen dem Wagenkasten 1 und dem Fahrwerk 2 anzuordnen und die Lastbestimmung auf Grundlage einer ersten Mittelwertberechnung mit den aus den Luftbälgen 3 erfassten Luftdrücken und einer zweiten Mittelwertberechnung mit den von den Beschleunigungssensoren 5 gemessenen Fahrzeugbeschleunigungen durchzuführen.

Fig. 3 zeigt ein Druckschema eines Teils eines aus dem Stand der Technik bekannten Druckluftsystems eines Schienenfahrzeugs, mit dem eine beispielhafte
Ausführungsvariante einer erfindungsgemäßen Vorrichtung zur Lastbestimmung verbunden ist.
Ein Luftbalg 3, der auch in Fig. 1 und in Fig. 2 dargestellt und beschrieben ist, wird mit Druckluft versorgt, deren Druckverhältnisse über ein Überströmventil 27 und ein Druckreduzierventil 28 eingestellt bzw. beeinflusst werden. Der Luftbalg 3 ist über eine erste Druckleitung 29 mit dem Druckreduzierventil 28 und dem Überströmventil 27 verbunden. Das Druckreduzierventil 28 und das Überströmventil 27 sind sequentiell entlang der ersten Druckleitung 29 angeordnet und entsprechend dem Stand der Technik ausgeführt.

Weiterhin ist die erste Druckleitung 29 mit einer zweiten Druckleitung 30 verbunden. Eine Verzweigung der ersten Druckleitung 29 mit der zweiten Druckleitung 30 ist unmittelbar im Bereich des Luftbalgs 3 ausgebildet.
An die zweite Druckleitung 30 ist ein auch in Fig. 2 gezeigter Drucksensor 4 angebunden, welcher Luftdrücke des Luftbalgs 3 erfasst.
Erfindungsgemäß ist es auch vorstellbar, den Drucksensor 4, wie in Fig. 2 gezeigt, unmittelbar auf dem Luftbalg 3 anzuordnen.
Der Drucksensor 4 ist über nicht gezeigte Leitungswege mit einer in Fig. 2 dargestellten Recheneinheit 6 verbunden. Luftdrücke werden in dem Drucksensor 4 in Drucksignale umgewandelt und in die Recheneinheit 6 übertragen. In der Recheneinheit 6 erfolgt eine in Zusammenhang mit Fig. 4 beschriebene, rechnerische Lastbestimmung auf Grundlage der Drucksignale bzw. der Luftdrücke sowie weiterer Signale.

Über die erste Druckleitung 29 und die zweite Druckleitung 30 ist der Luftbalg 3 mit einem aus dem Stand der Technik bekannten Lastbremsventil 31 verbunden, das wiederum, nicht dargestellt, pneumatisch an einen Bremszylinder einer Bremszange einer Reibungsbremse des Schienenfahrzeugs angeschlossen ist. Über das Lastbremsventil 31 erfolgt eine Beeinflussung eines Bremszylinderdrucks bzw. einer Bremskraft der Reibungsbremse und somit einer Verzögerung des Schienenfahrzeugs.
Darüber hinaus wird die Verzögerung des Schienenfahrzeugs über die rechnerische Lastbestimmung in der Recheneinheit 6, die mit einem in Fig. 4 gezeigten Bremssteuergerät 32 verbunden ist, eingestellt.

In Fig. 4 ist eine Ausführungsvariante eines erfindungsgemäßen Verfahrens zur Lastbestimmung eines Schienenfahrzeugs als Flussdiagramm dargestellt.
Über einen Drucksensor 4 eines in Fig. 1, Fig. 2 und Fig. 3 gezeigten Luftbalgs 3 werden Luftdrücke des Luftbalgs 3 erfasst. Über einen auch in Fig. 2 dargestellten Beschleunigungssensor 5 werden Fahrzeugbeschleunigungen in drei Raumrichtungen bezüglich Translation erfasst.
Die erfassten Luftdrücke werden in Drucksignale, die erfassten Fahrzeugbeschleunigungen in Beschleunigungssignale umgewandelt. Die Drucksignale und die Beschleunigungssignale werden an eine auch in Fig. 2 gezeigte Recheneinheit 6 übertragen.
In der Recheneinheit 6 wird rechnerisch die Lastbestimmung durchgeführt.
Die Fahrzeugbeschleunigungen werden in drei Impulssätze bezüglich der drei Raumrichtungen eingesetzt, die, wie aus dem Stand der Technik bekannt, Zusammenhänge zwischen einem Produkt aus einer Masse und einer Beschleunigung einerseits sowie einer Summe äußerer Kräfte andererseits als Gleichungen angeben. Aus den drei Impulssätzen werden die äußeren Kräfte durch geeignete mathematische Umformungen bestimmt. Die äußeren Kräfte beschreiben in Zusammenhang mit Fig. 2 beschriebene Fehler der Lastbestimmung.
Der Luftdruck des Luftbalgs 3 wird mit einer in Fig. 2 gezeigten Querschnittfläche 26 multipliziert, wodurch eine Balgkraft gebildet wird.
Von dieser Balgkraft werden die äußeren Kräfte abgezogen, wodurch eine Ergebniskraft gebildet wird. Diese Ergebniskraft gibt eine Last aus einer Gewichtskraft eines in Fig. 2 gezeigten Wagenkastens 1 und dessen Zuladung an.

Die Recheneinheit 6 ist über entsprechende Leitungswege mit einem Bremssteuergerät 32 verbunden, in dem auf Grundlage der Ergebniskraft und weiteren Parametern Bremsdrücke einer Reibungsbremse des Schienenfahrzeugs und somit Verzögerungen des Schienenfahrzeugs eingestellt werden.

Erfindungsgemäß ist es auch vorstellbar, dass die Recheneinheit 6 Teil des Bremssteuergeräts 32 ist bzw. die Lastbestimmung in dem Bremssteuergerät 32 selbst erfolgt.

### Liste der Bezeichnungen

- 1: Wagenkasten
- 2: Fahrwerk
- 3: Luftbalg
- 4: Drucksensor
- 5: Beschleunigungssensor
- 6: Recheneinheit
- 7: Abrollkolben
- 8: Anschlagpuffer
- 9: Luftbalg-Längsachse
- 10: Deckplatte
- 11: Grundplatte
- 12: Erste Befestigungsbohrung
- 13: Zweite Befestigungsbohrung
- 14: Erster Wagen
- 15: Zweiter Wagen
- 16: Dritter Wagen
- 17: Erstes Räderpaar
- 18: Zweites Räderpaar
- 19: Erster Wagenübergang
- 20: Zweiter Wagenübergang
- 21: Wagenkastenhochachse
- 22: Fahrwerkshochachse
- 23: Wagenkastenschwerpunkt
- 24: Fahrwerksschwerpunkt
- 25: Gesamtschwerpunkt
- 26: Querschnittfläche
- 27: Überströmventil
- 28: Druckreduzierventil
- 29: Erste Druckleitung
- 30: Zweite Druckleitung
- 31: Lastbremsventil
- 32: Bremssteuergerät
- 33: Fahrwerksrahmen
- 34: Sekundärfederung

## Patentansprüche

1. Vorrichtung zur Lastbestimmung für Fahrzeuge, insbesondere für Schienenfahrzeuge mit zumindest einem Wagenkasten (1) und zumindest einem Fahrwerk (2), wobei zumindest ein Luftbalg (3) mit zumindest einem Drucksenson (4) sowie zumindest ein Beschleunigungssensor (5) vorgesehen sind, und
wobei der zumindest eine Drucksensor (4) und der zumindest eine Beschleunigungssensor (5) mit zumindest einer Recheneinheit (6) verbunden sind, in der die Lastbestimmung erfolgt, **dadurch gekennzeichnet, dass** der zumindest eine Luftbalg (3) ausschließlich zur Lastbestimmung eingesetzt ist.

2. Vorrichtung nach Anspruch 1, **dadurch gekennzeichnet, dass** der zumindest eine Luftbalg (3) nahe einem Wagenkastenschwerpunkt (23) angeordnet ist, insbesondere, dass eine Luftbalg-Längsachse (9) durch den Wagenkastenschwerpunkt (23) verläuft.

3. Vorrichtung nach Anspruch 2, **dadurch gekennzeichnet, dass** der zumindest eine Beschleunigungssensor (5) nahe dem zumindest einen Luftbalg (3) angeordnet ist, insbesondere, dass die Luftbalg-Längsachse (9) durch den zumindest einen Beschleunigungssensor (5) verläuft.

4. Vorrichtung nach einem der Ansprüche 1, 2 oder 3, **dadurch gekennzeichnet, dass** der zumindest eine Luftbalg (3) und der zumindest eine Beschleunigungssensor (5) in einem Bereich zwischen dem zumindest einen Wagenkasten (1) und dem zumindest einen Fahrwerk (2) angeordnet sind.

5. Vorrichtung nach einem der Ansprüche 1, 2, 3 oder 4, **dadurch gekennzeichnet, dass** die zumindest eine Recheneinheit (6) in dem zumindest einen Wagenkasten (1) angeordnet ist.

6. Vorrichtung nach einem der Ansprüche 1, 2, 3, 4 oder 5, **dadurch gekennzeichnet, dass** der zumindest eine Luftbalg (3) mit einem Druckluftsystem des Fahrzeugs verbunden ist.

7. Verfahren zur Lastbestimmung mittels der Vorrichtung nach einem der Ansprüche 1, 2, 3, 4, 5 oder 6, **dadurch gekennzeichnet, dass** Luftdrücke des zumindest einen Luftbalgs (3) mittels des zumindest einen Drucksensors (4) sowie Fahrzeugbeschleunigungen mittels des zumindest einen Beschleunigungssensors (5) gemessen werden,
dass Drucksignale und Beschleunigungssignale an die zumindest eine Recheneinheit (6) übertragen werden, und
dass in der zumindest einen Recheneinheit (6) aus den Luftdrücken und den Fahrzeugbeschleunigungen Lasten des Fahrzeugs bestimmt werden.

## Claims

1. Apparatus for load determination for vehicles, in particular for rail vehicles with at least one car body (1) and at least one running gear (2), wherein at least one air bellows (3) with at least one pressure sensor (4) as well as at least one acceleration sensor (5) are provided, and wherein the at least one pressure sensor (4) and the at least one acceleration sensor (5) are connected to at least one computing unit (6), in which the load determination takes place, **characterised in that** the at least one air bellows (3) is exclusively used for the load determination.

2. Apparatus according to claim 1, **characterised in that** the at least one air bellows (3) is arranged close to a centre of gravity (23) of the car body, in particular that a longitudinal axis (9) of the air bellows runs through the centre of gravity (23) of the car body.

3. Apparatus according to claim 2, **characterised in that** the at least one acceleration sensor (5) is arranged close to the at least one air bellows (3), in particular that the longitudinal axis (9) of the air bellows runs through the at least one acceleration sensor (5).

4. Apparatus according to one of claims 1, 2 or 3, **characterised in that** the at least one air bellows (3) and the at least one acceleration sensor (5) are arranged in a region between the at least one car body (1) and the at least one running gear (2).

5. Apparatus according to one of claims 1, 2, 3 or 4, **characterised in that** the at least one computing unit (6) is arranged in the at least one car body (1).

6. Apparatus according to one of claims 1, 2, 3, 4 or 5, **characterised in that** the at least one air bellows (3) is connected to a compressed air system of the vehicle.

7. Method for load determination by means of the apparatus according to one of claims 1, 2, 3, 4, 5 or 6, **characterised in that** air pressures of the at least one air bellows (3) are measured by means of the at least one pressure sensor (4) and vehicle accelerations are measured by means of the at least one acceleration sensor (5),
pressure signals and acceleration signals are transferred to the at least one computing unit (6), and
loads of the vehicle are determined in the at least one computing unit (6) from the air pressures and the vehicle accelerations.

## Revendications

1. Dispositif de détermination de la charge de véhicules, en particulier de véhicules ferroviaires, comportant au moins une caisse de véhicule (1) et au moins un train de roues (2), au moins un soufflet à air (3) comportant au moins un capteur de pression (4) et au moins un capteur d'accélération (5) étant prévus,
et
l'au moins un capteur de pression (4) et l'au moins un capteur d'accélération (5) sont reliés à au moins une unité de calcul (6) qui détermine la charge, **caractérisé en ce que** l'au moins un soufflet à air (3) sert exclusivement à déterminer la charge.

2. Dispositif selon la revendication 1, **caractérisé en ce que** l'au moins un soufflet à air (3) est disposé à proximité d'un centre de gravité (23) de la caisse de véhicule, en particulier qu'un axe longitudinal (9) du soufflet à air passe par le centre de gravité (23) de la caisse de véhicule.

3. Dispositif selon la revendication 2, **caractérisé en ce que** l'au moins un capteur d'accélération (5) est disposé à proximité de l'au moins un soufflet à air (3) en particulier que l'axe longitudinal (9) du soufflet à air passe par l'au moins un capteur d'accélération (5).

4. Dispositif selon l'une des revendications 1, 2 ou 3, **caractérisé en ce que** l'au moins un soufflet à air (3) et l'au moins un capteur d'accélération (5) sont disposés à un endroit prévu entre l'au moins un châssis de véhicule (1) et l'au moins un train de roues (2).

5. Dispositif selon l'une des revendications 1, 2, 3 ou 4, **caractérisé en ce que** l'au moins une unité de calcul (6) est disposée dans l'au moins une caisse de véhicule (1).

6. Dispositif selon l'une des revendications 1, 2, 3, 4 ou 5, **caractérisé en ce que** l'au moins un soufflet à air (3) est relié à un système d'air comprimé du véhicule.

7. Procédé de détermination de la charge réalisé grâce au dispositif selon l'une des revendications 1, 2, 3, 4, 5 ou 6, **caractérisé en ce que** l'on mesure des pressions d'air de l'au moins un soufflet à air (3) à l'aide de l'au moins un capteur de pression (4) et des accélérations du véhicule à l'aide de l'au moins un capteur d'accélération (5) ,
**en ce que** des signaux de pression et d'accélération sont transmis à l'au moins une unité de calcul (6), et
**en ce que**, sur la base des pressions d'air et des accélérations du véhicule, l'au moins une unité de calcul (6) détermine les charges du véhicule.
